# EUROPEAN PATENT APPLICATION

(11) **EP 1 900 959 A2**
(43) Date of publication of application: **19.03.2008**
(21) Application number: 07010031.8
(22) Date of filing: 21.05.2007
(51) Int. Cl.: F16D 51/46

(54) **Improved shoe to machined cast anchor interface for duo-servo drum brake**

(30) Priority: 14.09.2006 US 522552
(71) Applicant: Akebono Corporation (North America), Elizabethtown KY 42701 (US)
(72) Inventor: Barbosa, Manuel, Michigan 48375 (US); Narayanan, Lakshmi, Michigan 48336 (US); Jedele, Philip N., Ypsilanti MI 48189 (US)
(74) Representative: Bawden, Peter Charles

(57) **Abstract**

A drum brake (10) includes a spider (12) having an anchor with as-cast recesses (62) and anchor (32) seats machined within the as-cast recesses (62). The as-cast recesses provide clearance for a shaft of a cutting tool during machining of the anchor seats (40). First (16) and second brake shoes (18) are pivotally supported by the anchor. Each brake shoe has a convex web portion positioned in communication with one of the anchor seats to transfer braking loads to the spider.

## Description

### BACKGROUND

The present disclosure generally relates to vehicle drum brake assemblies and drum-in-hat disc brake assemblies. More particularly, the present disclosure relates to a brake shoe to anchor interface.

Nearly all motor vehicles are equipped with a brake system for slowing or stopping the vehicle in a controlled manner. The brake system may include a number of disc brake assemblies, a number of drum brake assemblies or a combination of the two types. Some vehicles are equipped with a brake assembly called a "drum-in-hat" disc brake assembly that includes a disc brake portion and a drum brake portion. Many brake assemblies are actuated by hydraulic or pneumatic pressure. Other brake assemblies or portions of the brake assembly may be actuated through the use of linkage mechanisms having a force applied by the hand or foot of the vehicle operator.

Typical drum-in-hat disc brake assemblies include a hydraulically actuated disc service brake and a mechanically actuated drum-in-hat parking brake. The disc service brake includes a rotor secured for rotation with the wheel of the vehicle. The rotor includes a pair of opposed surfaces which are frictionally engaged by disc brake pads. A caliper assembly applies force to disc brake pads to cause engagement with the braking surfaces of the disc.

The drum-in-hat parking brake includes a pair of opposed arcuate brake shoes that are supported on a backing plate. The shoes are selectively engageable with a cylindrical braking surface formed in a hat portion of the rotor. A manually operated actuation mechanism applies a force to one or both of the brake shoes to engage the brake shoes with the drum.

Certain drum brakes include a pinned shoe design that includes a round post fixed to the backing plate. The anchor end of the shoe includes a concave portion engaging the round post. Other brake assemblies include a cast knuckle or adaptor having a machined anchor portion limiting the need for a separate steel post. Some of the brake designs having machined castings include a rounded anchor end that simulates the external surfaces of two round steel posts. Each brake shoe has an end with a concave portion that mates with the convex shape of the anchor support Unfortunately, machining this type of anchor support requires the use of a relatively expensive CNC machining center or the use of a special cam follower because the rounded external surfaces have offset centers. The machining process is time consuming and expensive.

Another anchor support design includes a brake shoe contacting anchor interface formed as a flat surface. While this design is relatively easy to manufacture, the brake shoes are no longer pinned to the backing plate to rotate about a predetermined axis. On the contrary, the brake shoes are free to translate relative to the backing plate and also the drum axis of rotation. Brake drag has been noted on many vehicles using this type of shoe anchor design because the brake shoes frequently move due to gravitational forces or road load input causing the brake shoes to rub against the drum surface. This condition may lead to poor vehicle mileage, early parking brake shoe lining wear and a degradation of parking brake performance.

Other brake designs incorporate machined cast anchor supports having concave surfaces. A concave anchor seat is machined to match a convex rounded anchor end of a brake shoe. This type of anchor support may be relatively easily machined and does not require a CNC machining center. However, a depth of the concave anchor seat is limited by the geometry of the cutter. Specifically, the cutter includes a cutting portion having an outer diameter and a shaft supporting the cutting portion which typically has a smaller diameter. The diameter of the cutting portion and the diameter of the shaft define a maximum depth of cut allowable because the shaft must remain clear of the edge of the anchor support during the machining operation otherwise tool failure may occur. This machining concern results in a relatively shallow anchor seat. If the anchor seat is insufficiently recessed into the anchor support, the forces transferred to the anchor support from the shoe during braking may be undesirably concentrated against the edge of the anchor slot. High stresses result which may lead to anchor deformation, cracking and potential fracture.

### SUMMARY

A drum brake includes a spider having an anchor with as-cast recesses and anchor seats machined within the as-cast recesses. The as-cast recesses provide clearance for a shaft of a cutting tool during machining of the anchor seats. First and second brake shoes are pivotally supported by the anchor. Each brake shoe has a convex web portion positioned in communication with one of the anchor seats to transfer braking loads to the spider.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.

Figure 1 is a partial perspective view of a drum-in-hat disc brake assembly according to the principles of the present disclosure;

Figure 2 is an exploded perspective view of the brake shown in Figure 1;

Figure 3 is a partial fragmentary perspective view of a spider component of the brake assembly depicted in Figures 1 and 2 along with an exemplary cutting tool;

Figure 4 is a fragmentary plan view of a portion of the spider; and

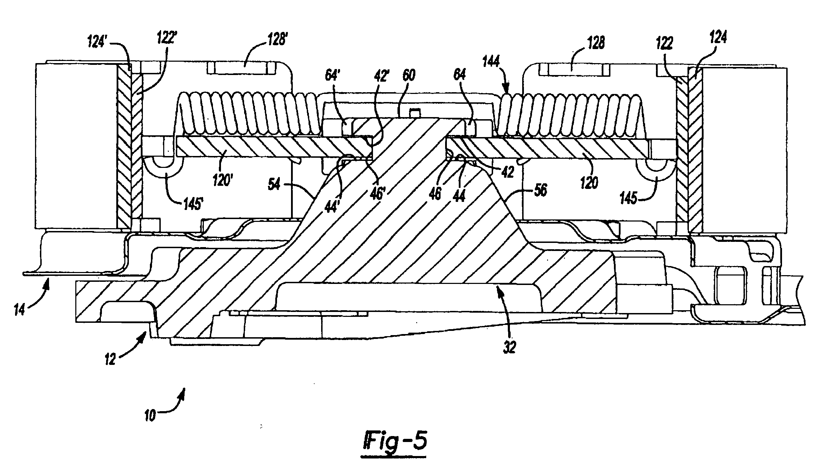

Figure 5 is a cross-sectional view of the brake assembly taken along line 5-5 as shown in Figure 1.

### DETAILED DESCRIPTION

The following description is merely exemplary in nature and is not intended to limit the present disclosure, application, or uses.

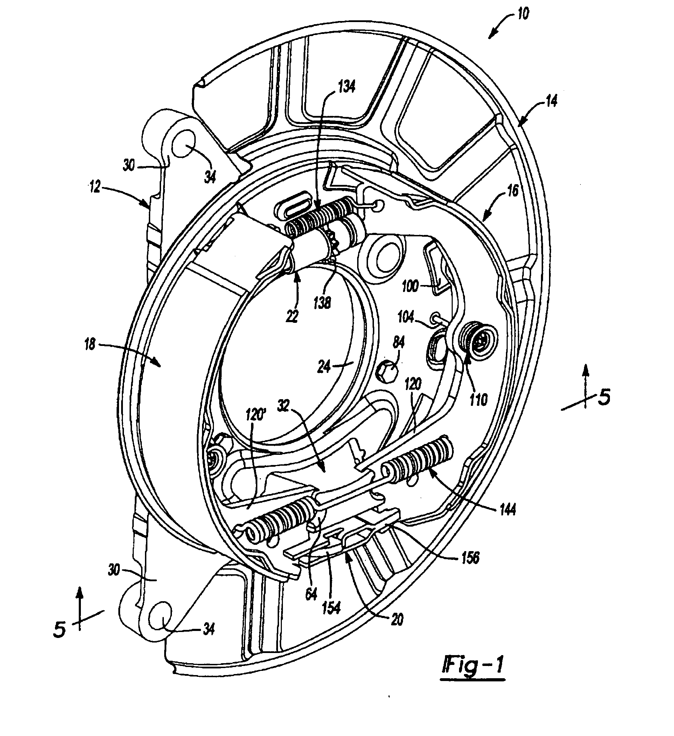

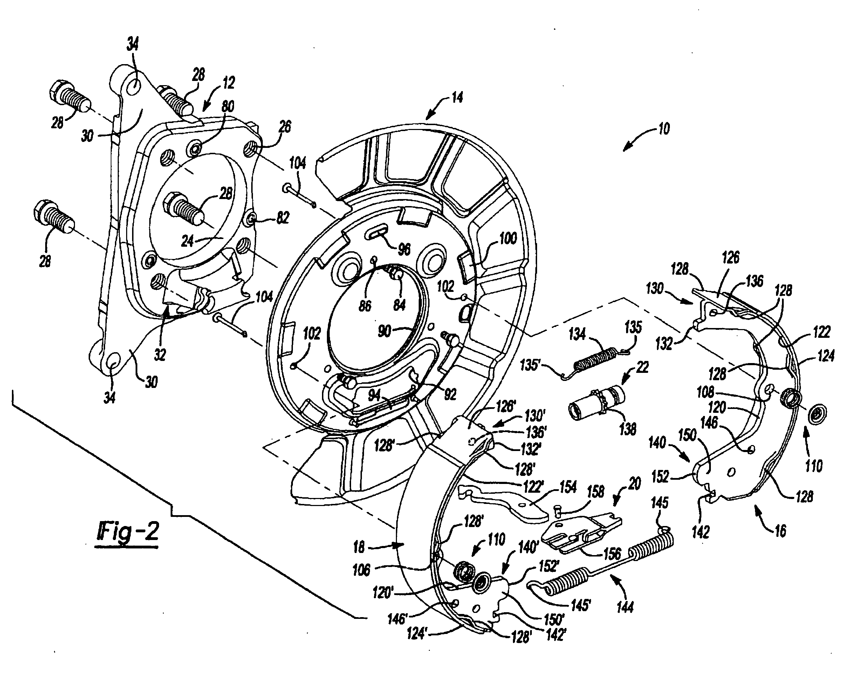

Figures 1 and 2 depict a portion of a drum-in-hat disc brake assembly identified at reference number 10. The drum-in-hat disc brake assembly 10, hereinafter referred to as brake assembly 10, includes a hydraulically or pneumatically actuated disc surface brake (not shown) and a drum-in-hat parking brake. Although the description and illustrations relate to a particular vehicle drum-in-hat disc brake assembly, it will be appreciated that the present disclosure may be used in connection with other drum-in-hat disc brake assemblies and other drum brake assemblies associated with service brake applications as well.

Figures 1 and 2 depict brake assembly 10 including a spider 12, a backing plate 14, a first brake shoe assembly 16, a second brake shoe assembly 18, a link assembly 20 and an adjuster assembly 22. Spider 12 is depicted as a one-piece casting adapted to be secured to a non-rotatable component of the vehicle, such as an axle flange or a steering knuckle (not shown). Spider 12 includes a relatively large aperture 24 extending therethrough and a plurality of bores 26 circumferentially spaced apart around aperture 24. Aperture 24 is sized and shaped to pilot on a portion of the axle and permit another portion of the axle to extend therethrough toward the vehicle wheel (not shown). Fasteners 28 are positioned within bores 26 to secure spider 12 to the associated vehicle component.

Spider 12 also includes a pair of outwardly extending ears 30 and an anchor 32. Ears 30 are provided with apertures 34 extending therethrough. Suitable fasteners (not shown) are positioned in apertures 34 to attach a disc brake caliper assembly (not shown) to spider 12.

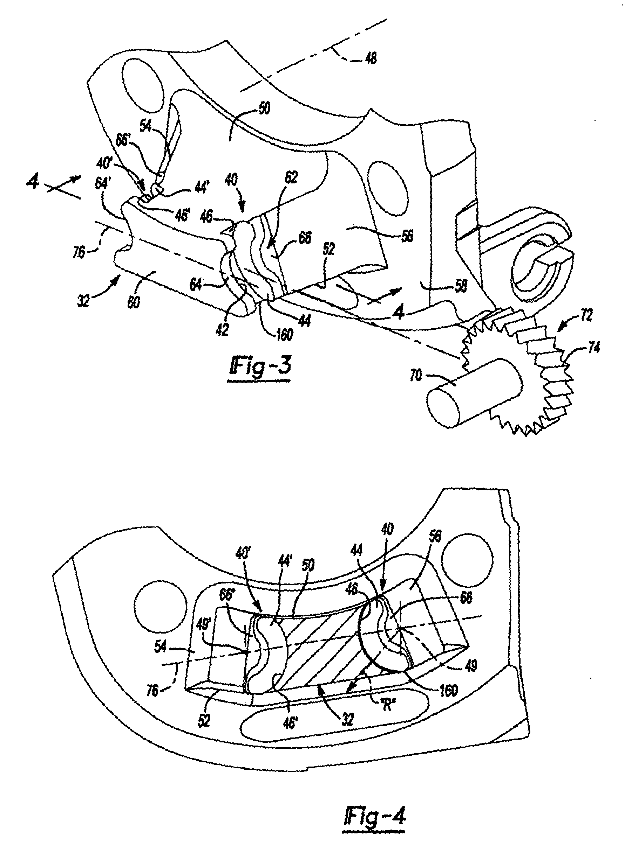

Anchor 32 is shown integrally cast with spider 12 protruding in an outboard axial direction from the remainder of spider 12. As is most clearly depicted in Figure 3, anchor 32 includes a number of "as-cast" surfaces and a pair of opposed seats 40 and 40' machined therein. In the illustrated brake assembly, seats 40 and 40' are substantially identical to one another. Accordingly, like numerals will be used to identify similar elements. Seat 40 includes a pair of opposed side surfaces 42 and 44 as well as a bottom surface 46. Side surfaces 42 and 44 extend substantially parallel to one another and perpendicular to an axis of drum rotation 48. Bottom surface 46 is substantially arcuately shaped and extends substantially perpendicularly between side surfaces 42 and 44. In the embodiment depicted in Figures 3 and 4, bottom surface 46 is shaped as an arc having a center 49.

The as-cast surfaces of anchor 32 include an inner surface 50, an outer surface 52 and side walls 54 and 56 extending axially outboard from a substantially planar surface 58 formed on spider 12. Anchor 32 includes an end face 60 extending substantially parallel to planar surface 58. Side walls 54 and 56 extend at an angle from surface 58 such that anchor 32 defines a footprint on surface 58 having a greater surface area than end face 60. In addition, inner surface 50 and outer surface 52 are substantially arcuately shaped where inner surface 50 extends an arc length less than outer surface 52.

Recesses 62 are also formed during the casting process of spider 12. Recesses 62 are defined by arcuately shaped scallops 64 axially inwardly extending from end face 60 and terminating at a land 66. Scallops 64 and land 66 are as-cast surfaces and remain in this condition throughout the finishing processes, including machining, of spider 12 and use of brake assembly 10. Scallops 64 are shaped to provide clearance for a shaft 70 of an exemplary cutter 72 shown in Figure 4. Cutter 72 includes a cutting portion 74 that is axially translated along an axis 76 to form seats 40. The curved shape of bottom surface 46 corresponds to the outer diameter of cutting portion 74. By forming anchor 32 with recesses 62 during a casting or forging process, machining seats 40 is greatly simplified. In particular, only a relatively small amount of material needs to be removed during a cutter plunge. Furthermore, the tooling required to perform a cutter plunge along a single axis of travel is very simple and inexpensive compared to computer numerically controlled machines operable to move cutters along multiple axes.

Spider 12 also includes a plurality of bosses 80 axially extending in an outboard direction from surface 58. Each of bosses 80 includes an internally threaded bore 82 extending therethrough. Threaded fasteners 84 extend through apertures 86 formed in backing plate 14 and threadingly engage bores 82 to mount backing plate 14 to spider 12. Backing plate 14 is shown as a stamped sheet metal structure having a relatively large central opening 90 which permits an outer end of the axle or steering knuckle to extend therethrough to support a wheel (not shown).

Backing plate 14 also includes a first generally slotted opening 92, a second generally slotted opening 94 and a third generally slotted opening 96. First slotted opening 92 is shaped and positioned to allow anchor 32 to extend therethrough. Second slotted opening 94 is sized and positioned to allow link assembly 20 to extend therethrough. Third slotted opening 96 is positioned and sized to allow access to adjuster assembly 22 and adjust the parking brake while the brake assembly is in assembled condition. Backing plate 14 further includes a plurality of rest pads 100 and a plurality of openings 102. Openings 102 are adapted to receive pins 104. Pins 104 extend through openings 102 and backing plate 14 as well as apertures 106, 108 extending through first brake shoe assembly 16 and second brake shoe assembly 18, respectively. Pins 104 have outer ends shaped to be secured to spring and clip assemblies 110 to secure brake shoe assemblies 16 and 18 to backing plate 14.

First brake shoe assembly 16 and second brake shoe assembly 18 are substantially similar to one another. Accordingly, like reference numerals will be used to indicate similar features. First brake shoe assembly 16 and second brake assembly 18 include webs 120 and 120' which are generally planar sheets of steel having a crescent shape. Generally arcuate-shaped tables 122 and 122' are secured to outer curved surfaces of webs 120 and 120' via a process such as welding. Lining blocks 124 and 124' are secured to outer surfaces 126 and 126' of tables 122 and 122'. Lining blocks 124 and 124' may be adhesively bonded, or secured to the tables 122 and 122' via mechanical fasteners such rivets or bolts. Each of tables 122 and 122' include a plurality of upset portions 128 and 128' positioned on each inboard and outboard edge of tables 122 and 122'. The upset portions located on the inboard edge of tables 122 and 122' are positioned to slide along pads 100 formed on backing plate 14.

Brake shoe webs 120 and 120' include a first end 130 and 130' having a dog 132 and 132' formed thereon. The dogs 132 and 132' are sized and positioned to mate with portions of adjuster assembly 22. A first spring 134 includes hooks 135 and 135' extending through apertures 136 and 136' to bias first brake shoe assembly 16 and second brake shoe assembly 18 toward their retracted positions. Spring 134 engages a toothed portion 138 of adjuster assembly 22 to maintain the adjusted position of the brake assembly. Brake shoe webs 120 and 120' include second ends 140 and 140'. Notches 142 and 142' are formed in second ends 140 and 140' to receive link assembly 20. A second return spring 144 includes ends 145 and 145' extending through apertures 146 and 146' extending through webs 120 and 120'. Second return spring 144 applies a load to each of first and second brake shoe assemblies 16 and 18 drawing the brake shoes toward their retracted position. Furthermore, webs 120, 120' include lobes 150 and 150' positioned within seats 40 of spider 12. Convexly shaped surfaces 152 and 152' are formed on the distal ends of lobes 150 and 150'. When brake assembly 10 is not being actuated to transmit torque, convex surfaces 152 and 152' engage bottom surfaces 46 and 46', respectively, of anchor 32 to properly position first brake shoe assembly 16 and second brake shoe assembly 18 relative to the drum (not shown).

Link assembly 20 is a parking brake actuator operable to apply forces to second ends 140 and 140' of first and second brake shoe assemblies 16 and 18. Link assembly 20 includes a lever arm 154 rotatably coupled to a cross bar 156 by a pin 158. A cable or another linkage device (not shown) is used to provide an input force to lever arm 154 and apply the parking brake. The following description will relate to brake operation during a clockwise direction of drum rotation when viewed from a position outboard of brake assembly 10 as depicted in Figure 1. In operation, the parking brake is applied by applying a force to link assembly 20. Link assembly 20 applies forces to second ends 140 and 140' of first brake shoe assembly 16 and second brake shoe assembly 18. Based on the rotation of the drum, and engagement of lining block 124' with the drum, second brake shoe assembly 18 tends to rotate clockwise in the same direction as the brake drum. First end 130' of second brake shoe assembly 18 applies a load to adjuster assembly 22. The load is transferred to first end 130 of first brake shoe assembly 16. Lining block 124 of first brake shoe assembly 16 frictionally engages the drum and is also rotated in a clockwise direction. Due to the self-energizing nature of the brake shoes and the duo-servo arrangement, convex surface 152 of first brake shoe assembly 16 is driven into contact with bottom surface 46 of anchor 32. At this time, convex surface 152' is not engaged with bottom surface 46' while convex surface 152' transfers a relatively large load to anchor 32.

Anchor 32 reacts the load from first brake shoe assembly 16 without structural incident due to the relatively deep plunge of cutter 72 and resulting arc length of bottom surface 46. More specifically, the resultant force acting on anchor 32 during braking passes through second end 140 of first brake shoe assembly 16 acting along a line "R". The force enters anchor 32 at a location offset from an edge 160 defined by the intersection of bottom surface 46 and outer surface 52 of anchor 32. A structurally robust design results. One skilled in the art will appreciate that when the drum rotates in the opposite or counterclockwise direction, convex surface 152 is spaced apart from anchor 32 while convex surface 152' is driven into engagement with bottom surface 46'.

Furthermore, the foregoing discussion discloses and describes merely exemplary embodiments of the present invention. One skilled in the art will readily recognize from such discussion, and from the accompanying drawings and claims, that various changes, modifications and variations may be made therein without department from the spirit and scope of the invention as defined in the following claims.

## Claims

1. A drum brake comprising:
a. a spider having an anchor with as-cast recesses and anchor seats machined within the as-cast recesses, wherein the as-cast recesses provide clearance for a shaft of a cutting tool during machining of the anchor seats; and
b. first and second brake shoes pivotally supported by the anchor, each brake shoe having a convex web portion positioned in communication with one of the anchor seats to transfer braking loads to the spider.

2. The drum brake of claim 1 wherein the first and second brake shoes each include an end coupled to an adjustment mechanism, the adjustment mechanism being free to move relative to the spider.

3. The drum brake of claim 1 or claim 2 wherein the first and second brake shoes each include an opposite end coupled to an actuation mechanism, the actuation mechanism being located radially outward from positions of the anchor seats.

4. The drum brake of any of the preceding claims wherein each of said anchor seats is machined by axially translating a cutter along a single axis.

5. The drum brake of any of the preceding claims wherein each anchor seat includes machined, spaced apart and substantially parallel side faces interconnected by a machined arcuate bottom surface.

6. The drum brake of any of the preceding claims wherein each of the first and second brake shoes includes a substantially planar web having a portion positioned between the side faces to restrict the brake shoes from moving inboard or outboard relative to the spider.

7. The drum brake of any of the preceding claims wherein said first and second brake shoes are free to pivot and are restrained from translating relative to the spider.

8. The drum brake of any of the preceding claims further including a backing plate fixed to the spider, the backing plate including raised pads supporting edges of each of the first and second brake shoes.

9. The drum brake of any of the preceding claims wherein the first and second brake shoes each include an end coupled to an adjustment mechanism, the adjustment mechanism being free to move relative to the spider.

10. The drum brake of any of the preceding claims wherein the first and second brake shoes each include an opposite end coupled to an actuation mechanism, the actuation mechanism being located radially outward from positions of the anchor seat.

11. A vehicle brake assembly comprising:
a. a spider adapted to support a disc brake caliper and further adapted to be mounted to a non-rotatable component of the vehicle, the spider having an anchor with a recess positioned to receive a shaft of a cutting tool during machining of an anchor seat in the anchor, the recess allowing the cutting tool to enter the anchor a further distance than possible if the recess were not present; and
b. first and second brake shoes each having web portions with convex lobes, one of the convex lobes engaging the anchor seat.

12. The brake assembly of claim 11 wherein the anchor seat includes machined, spaced apart and substantially parallel side faces interconnected by a machined arcuate bottom surface and wherein one of the web portions is positioned between the parallel side faces.

13. A method of manufacturing a brake assembly having a spider, a first brake shoe assembly and a second brake shoe assembly, the method comprising:
a. casting a recess into the spider to provide clearance for a shaft of a cutting tool;
b. machining an anchor seat at a location proximate the recess by axially translating the cutting tool along a single axis to a position where the shaft of the cutting tool enters the cast recess; and
c. positioning a portion of one of the first and second brake shoe assemblies in engagement with the anchor seat.
